# EUROPÄISCHE PATENTSCHRIFT

(11) **EP 1 012 469 B1**
(45) Veröffentlichungstag und Bekanntmachung des Hinweises auf die Patenterteilung: **09.07.2003**
(21) Anmeldenummer: 99942647.1
(22) Anmeldetag: 07.04.1999
(51) Int. Cl.: F02M 51/06

(54) **BRENNSTOFFEINSPRITZVENTIL**
FUEL INJECTION VALVE
SOUPAPE D'INJECTION DE CARBURANT

(30) Priorität: 11.04.1998 DE 19816315
(43) Veröffentlichungstag der Anmeldung: 28.06.2000
(73) Patentinhaber: ROBERT BOSCH GMBH, 70442 Stuttgart (DE)
(72) Erfinder: EICHENDORF, Andreas, D-73614 Schorndorf (DE); SEBASTIAN, Thomas, D-70193 Stuttgart (DE); PILGRAM, Guido, D-71701 Schwieberdingen (DE); NORGAUER, Rainer, D-71642 Ludwigsburg (DE)
(86) Internationale Anmeldenummer: DE9901040
(87) Internationale Veröffentlichungsnummer: WO99053189

(56) Entgegenhaltungen:
- EP-A- 0 404 336
- WO-A-93/00540
- DE-A- 3 314 899

## Beschreibung

### Stand der Technik

Die Erfindung geht aus von einem Brennstoffeinspritzventil nach der Gattung des Hauptanspruchs.

Aus der DE-OS 33 14 899 ist bereits ein elektromagnetisch betätigbares Brennstoffeinspritzventil bekannt, bei welchem zur elektromagnetischen Betätigung ein Anker mit einer elektrisch erregbaren Magnetspule zusammenwirkt und der Hub des Ankers über eine Ventilnadel auf einen Ventilschließkörper übertragen wird. Der Ventilschließkörper wirkt mit einem Ventilsitz zusammen. Der Anker ist an der Ventilnadel nicht starr befestigt, sondern der Anker ist gegenüber der Ventilnadel axial beweglich angeordnet. Eine erste Rückstellfeder beaufschlagt die Ventilnadel in Schließrichtung und hält somit das Brennstoffeinspritzventil im stromlosen, nicht erregten Zustand der Magnetspule geschlossen. Der Anker wird mittels einer zweiten Rückstellfeder in Hubrichtung so beaufschlagt, daß der Anker in der Ruhestellung an einem ersten, an der Ventilnadel vorgesehenen Anschlag anliegt. Bei Erregen der Magnetspule wird der Anker in Hubrichtung angezogen und nimmt über den ersten Anschlag die Ventilnadel mit. Beim Abschalten des die Magnetspule erregenden Stromes wird die Ventilnadel mittels der ersten Rückstellfeder in ihre Schließstellung beschleunigt und führt über den beschriebenen Anschlag den Anker mit. Sobald der Ventilschließkörper auf dem Ventilsitz auftrifft, wird die Schließbewegung der Ventilnadel abrupt beendet. Die Bewegung des mit der Ventilnadel nicht starr verbundenen Ankers setzt sich entgegen der Hubrichtung fort und wird von der zweiten Rückstellfeder aufgefangen, d. h. der Anker schwingt gegen die gegenüber der ersten Rückstellfeder eine wesentlich geringere Federkonstante aufweisende zweite Rückstellfeder durch. Die zweite Rückstellfeder beschleunigt den Anker schließlich erneut in Hubrichtung. Wenn der Anker an dem Anschlag der Ventilnadel auftrifft, kann dies zu einem erneuten kurzzeitigen Abheben des mit der Ventilnadel verbundenen Ventilschließkörpers von dem Ventilsitz und somit zum kurzzeitigen Öffnen des Brennstoffeinspritzventils führen. Die Entprellung ist bei dem aus der DE-OS 33 14 899 bekannten Brennstoffeinspritzventil daher unvollständig. Ferner ist sowohl bei einem konventionellen Brennstoffeinspritzventil, bei welchem der Anker starr mit der Ventilnadel verbunden ist, als auch bei dem aus der DE-OS 33 14 899 bekannten Brennstoffeinspritzventil nachteilig, daß der Öffnungshub der Ventilnadel sofort einsetzt, sobald die von der Magnetspule auf den Anker ausgeübte Magnetkraft die Summe der in Schließrichtung wirkenden Kräfte, d. h. der von der ersten Rückstellfeder ausgeübten Federschließkraft und der hydraulischen Kräfte des unter Druck stehenden Brennstoffs. übersteigt. Dies ist insofern nachteilig, als beim Einschalten des die Magnetspule erregenden Stromes die Magnetkraft aufgrund der Selbstinduktion der Magnetspule und auftretender Wirbelströme noch nicht ihren endgültigen Wert erreicht. Die Ventilnadel und der Ventilschließkörper werden daher zu Beginn des Öffnungshubs von einer verminderten Kraft beschleunigt. Dies führt zu einer nicht für alle Anwendungsfälle befriedigenden Öffnungszeit.

In der US-PS 5,299,776 ist in diesem Zusammenhang vorgeschlagen worden, den Anker nicht starr mit der Ventilnadel zu verbinden, sondern dem Anker ein gewisses axiales Bewegungsspiel an der Ventilnadel zu ermöglichen. Die axiale Lage des Ankers in der Ruhestellung des Brennstoffeinspritzventils ist jedoch bei dieser Ausgestaltung nicht definiert und somit ist bei dem aus dieser Druckschrift bekannten Brennstoffeinspritzventil die Ansprechzeit beim Einschalten des Erregerstroms unbestimmt.

### Vorteile der Erfindung

Das erfindungsgemäße Brennstoffeinspritzventil mit den kennzeichnenden Merkmalen des Hauptanspruchs hat demgegenüber den Vorteil, daß das Brennstoffeinspritzventil in befriedigender Weise entprellt ist und außerdem eine äußerst geringe Öffnungszeit aufweist.

Dadurch, daß die zweite Rückstellfeder den Anker in dem Ruhezustand des Brennstoffeinspritzventils nicht an dem an der Ventilnadel vorgesehenen ersten Anschlag, sondern an einem von dem ersten Anschlag der Ventilnadel beabstandeten, stationären zweiten Anschlag in Anlage hält, wird beim Schließen des Brennstoffeinspritzventils erreicht, daß der Anker durch die zweite Rückstellfeder nicht wieder in Hubrichtung beschleunigt wird. Beim Schließen des Brennstoffeinspritzventils wird zunächst die Bewegung der Ventilnadel abrupt beendet, wenn der Ventilschließkörper infolge der Beschleunigung durch die erste Rückstellfeder an dem Ventilsitz zur Anlage kommt. Die Bewegung des Ankers setzt sich auch bei dem erfindungsgemäßen Brennstoffeinspritzventil in Schließrichtung, d. h. entgegen der Hubrichtung, fort, bis der Anker den zweiten Anschlag erreicht. Wenn der Anker von dem zweiten Anschlag zurückprallt, wird er jedoch von der zweiten Rückstellfeder wieder entgegen der Hubrichtung beschleunigt, und es wird verhindert, daß der Anker den ersten Anschlag an der Ventilnadel wieder erreicht und somit die Ventilnadel in Öffnungsrichtung mitführt. Durch die zweite Rückstellfeder wird der Anker von dem an der Ventilnadel vorgesehenen ersten Anschlag so lange auf Abstand gehalten, bis der Anker durch die Magnetspule infolge des nächsten die Magnetspule erregenden Stromimpulses wieder in Hubrichtung beschleunigt wird.

Ein weiterer Vorteil des erfindungsgemäßen Brennstoffeinspritzventils liegt darin, daß der Anker vor dem Erreichen des an der Ventilnadel vorgesehenen ersten Anschlags, d. h. vor dem Mitführen der Ventilnadel, zunächst vorbeschleunigt wird. Dadurch erreicht der Anker bereits vor dem Mitführen der Ventilnadel einen Impuls, den er auf die Ventilnadel überträgt. Im Vergleich zu einem Brennstoffeinspritzventil, bei welchem der Anker starr mit der Ventilnadel verbunden ist oder einem Brennstoffeinspritzventil, bei welchem der Anker zwar gegenüber der Ventilnadel beweglich ist, in der Ruhestellung jedoch an dem Anschlag der Ventilnadel anliegt, wird eine wesentlich kürzere Öffnungszeit und somit eine genauere Zumessung des Brennstoffs erreicht. Ein weiterer, die Öffnungszeit verkürzender Effekt besteht darin, daß die auf den Anker ausgeübte Magnetkraft beim Einschalten des die Magnetspule erregenden Stromimpulses zunächst aufgrund der Selbstinduktion der Magnetspule und durch von der Magnetspule erregte Wirbelströme vermindert ist. Bei geeigneter Dimensionierung des Abstandes zwischen dem zweiten Anschlag, an welchem der Anker in seiner Ruhestellung positioniert ist, und dem ersten, der Mitführung der Ventilnadel dienenden Anschlag, kann daher erreicht werden, daß beim Anschlagen des Ankers an dem ersten Anschlag der Ventilnadel bereits soviel Zeit vergangen ist, daß die Magnetkraft ihren endgültigen konstanten Wert erreicht hat. Durch die vorgeschaltete Flugzeit des Ankers wird daher eine Zeitverzögerung erreicht, die die nachfolgende Öffnungszeit des Brennstoffeinspritzventils signifikant verkürzt.

Durch die in den Unteransprüchen aufgeführten Maßnahmen sind vorteilhafte Weiterbildungen und Verbesserungen des im Hauptanspruchs angegebenen Brennstoffeinspritzventils möglich.

Vorzugsweise ist an der Ventilnadel ein Flansch, vorzugsweise in Form eines Stufenzylinders. vorgesehen. Der Flansch kann mit der Ventilnadel einstückig ausgebildet und z. B. durch Pressen hergestellt sein. Alternativ ist es möglich, den Flansch als separates Bauteil auszubilden und mit der Ventilnadel, z. B. durch Schweißen, Löten oder dergleichen zu verbinden. Wenn der Flansch als Stufenzylinder ausgebildet ist, dient vorzugsweise eine erste Stufe als erster Anschlag für den Anker, während sich die zweite Rückstellfeder an einer zweiten Stufe des Stufenzylinders abstürzt. Die erste Rückstellfeder kann sich an einer der zweiten Rückstellfeder gegenüberliegenden Stirnfläche des Stufenzylinders abstützen. An dem stufenzylinderförmigen Flansch sind daher einige im Rahmen der Erfindung wesentliche Funktionen vereint.

Vorzugsweise ist der zweite Anschlag und eine dem zweiten Anschlag gegenüberliegende Stirnfläche des Ankers flächig ausgebildet. Der Zwischenraum zwischen dem Anker und dem zweiten Anschlag ist vorzugsweise mit einem Brennstoffkanal verbunden, in welchen der Brennstoff von einem Brennstoffzulaufstutzen zu dem Ventilschließkörper geführt ist. Beim Abheben des Ankers von dem zweiten Anschlag füllt sich daher der Zwischenraum zwischen dem Anker und dem zweiten Anschlag mit Brennstoff. Dies bewirkt beim Schließen des Brennstoffeinspritzventils eine Quetschströmung zwischen dem zweiten Anschlag und dem Anker, wenn sich der Zwischenraum aufgrund des Schließbewegung des Ankers verringert. Die Quetschströmung bedingt eine Dämpfung, so daß der Anker an dem zweiten Anschlag nahezu prellfrei zur Ruhe kommt.

Die zweite Rückstellfeder kann auch in einer ringförmigen Ausnehmung des Ankers integriert sein. Dabei kann die ringförmige Ausnehmung auf der dem ersten Anschlag gegenüberliegenden Seite des Ankers ausgebildet sein, wenn die zweite Rückstellfeder in Zugrichtung vorgespannt ist. Dabei ergibt sich eine besonders kompakte Bauweise.

Der Abstand zwischen dem Anker und dem ersten Anschlag ist vorzugsweise so bemessen, daß während einer Flugzeit, die der Anker bei Erregung der Magnetspule bis zum Erreichen des ersten Anschlags benötigt, sich eine im wesentlichen konstante Magnetkraft, die die Magnetspule auf den Anker ausübt, eingestellt hat. Auf diese Weise wird eine besonders kurze Öffnungszeit des Brennstoffeinspritzventils erreicht.

### Zeichnung

Ausführungsbeispiele der Erfindung sind in der Zeichnung vereinfacht dargestellt und in der nachfolgenden Beschreibung näher erläutert. Es zeigen:
- Fig. 1: ein Brennstoffeinspritzventil gemäß dem Stand der Technik in einer geschnittenen Darstellung;
- Fig. 2: eine ausschnittsweise, geschnittene Darstellung eines ersten Ausführungsbeispiels des erfindungsgemäßen Brennstoffeinspritzventils;
- Fig. 3: eine vergrößerte Darstellung des Ausschnitts III in Fig. 2; und
- Fig. 4: eine ausschnittsweise, geschnittene Darstellung eines zweiten Ausführungsbeispiels des erfindungsgemäßen Brennstoffeinspritzventils.

### Beschreibung des Ausführungsbeispiels

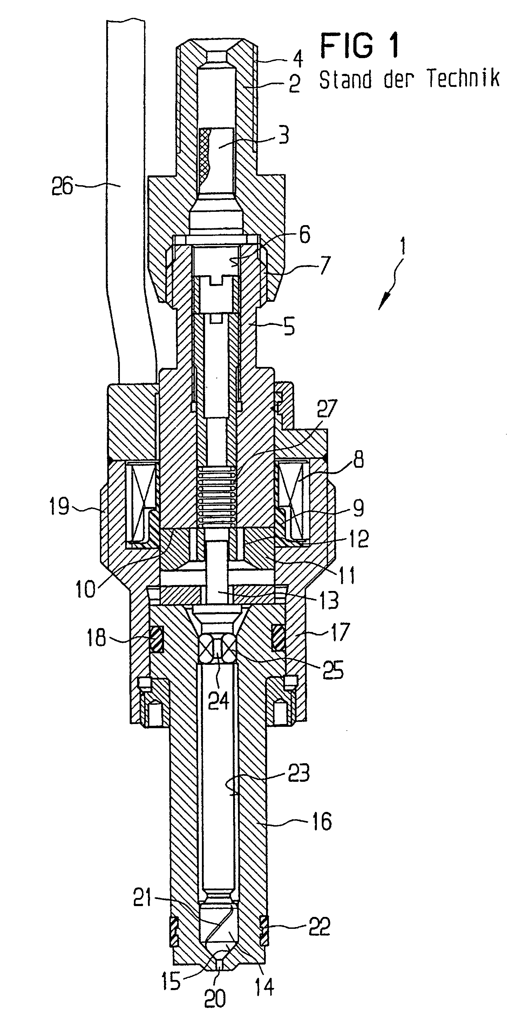

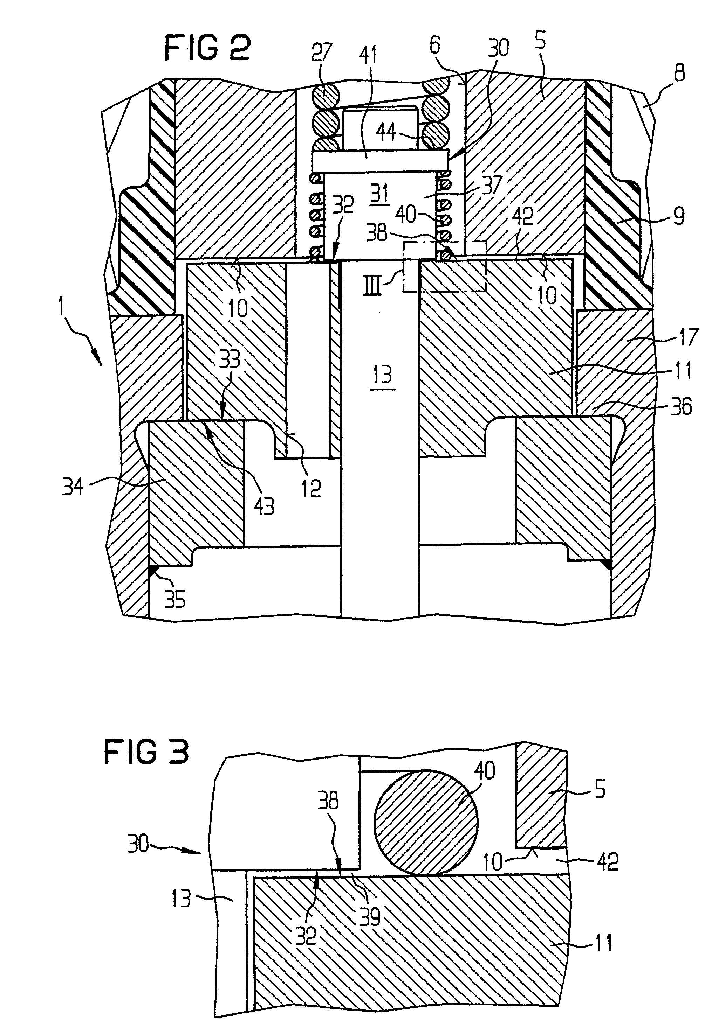

Bevor anhand der Fig. 2, 3 und 4 zwei Ausführungsbeispiele eines erfindungsgemäßen Brennstoffeinspritzventils näher beschrieben werden, soll zum besseren Verständnis der Erfindung zunächst anhand von Fig. 1 ein bereits bekanntes Brennstoffeinspritzventil bezüglich seiner wesentlichen Bauteile kurz erläutert werden.

Das allgemein mit dem Bezugszeichen 1 versehene Brennstoffeinspritzventil weist einen Brennstoffzulaufstutzen 2 auf, welcher über ein Gewinde 4 mit einer Brennstoffleitung in an sich bekannter Weise verbindbar ist. Das Brennstoffeinspritzventil 1 ist in der Form eines Einspritzventils für Brennstoffeinspritzanlagen von gemischverdichteten, fremdgezündeten Brennkraftmaschinen ausgeführt. Das Brennstoffeinspritzventil 1 eignet sich besonders zum direkten Einspritzen von Brennstoff in einen nicht dargestellten Brennraum einer Brennkraftmaschine. Der Brennstoff gelangt über ein Brennstoffilter 3 zu einer in einem Kern 5 ausgebildeten Längsbohrung 6. Der Kern 5 weist einen äußeren Gewindeabschnitt 7 auf, der mit dem Brennstoffeinlaßstutzen 2 verschraubt ist.

Der Kern 5 ist an seinem stromabwärtigen Ende 10 von einer Magnetspule 8 umgeben, die auf einen Spulenträger 9 gewickelt ist. Stromabwärts des abspritzseitigen Endes 10 des Kerns 5 befindet sich ein durch einen geringfügigen Spalt von dem abspritzseitigen Ende 10 des Kerns 5 beabstandeter Anker 11. Der Anker 11 weist Bohrungen 12 für den Durchtritt des Brennstoffs auf. Der Anker 12 ist ferner mit einer Ventilnadel 13 z. B. durch Schweißen starr verbunden. An dem dem Anker 11 gegenüberliegenden Ende weist die Ventilnadel 13 einen Ventilschließkörper 14 auf, der mit einem an einem Ventilsitzträger 16 ausgebildeten Ventilsitz 15 zusammenwirkt. Der Ventilsitzträger 16 ist in dem in Fig. 1 dargestellten Beispiel in einen Gehäusekörper 17 eingesetzt und mittels eines Dichtrings 18 abgedichtet.

Der Gehäusekörper 17 ist mittels eines Gewindes 19 in einen nicht dargestellten Zylinderkopf einer Brennkraftmaschine einschraubbar. Beim Öffnen des Brennstoffeinspritzventils 1 wird Brennstoff über wenigstens eine am stromabwärtigen Ende des Ventilsitzträgers 16 ausgebildete Abspritzöffnung 20 in den ebenfalls nicht dargestellten Brennraum der Brennkraftmaschine eingespritzt. Zur besseren Verteilung des Brennstoffs dienen z. B. mehrere umfänglich eingebrachte Drallnuten 21 an dem Ventilschließkörper 14. Zur Abdichtung des Ventilsitzträgers 16 in der Bohrung des Zylinderkopfes dient eine Dichtung 22. Die Ventilnadel 13 ist in einer Längsbohrung 23 des Ventilsitzträgers 16 an Führungsflächen 24 geführt. Zwischen den Führungsflächen 24 befinden sich Abflachungen 25, um den ungehinderten Durchfluß des Brennstoffs zu ermöglichen.

Zum Öffnen des Brennstoffeinspritzventils 1 wird die Magnetspule 8 durch einen elektrischen Erregerstrom erregt, der über ein elektrisches Verbindungskabel 26 zugeführt wird. In dem Ruhezustand des Brennstoffeinspritzventils 1 wird der Anker 11 über eine erste Rückstellfeder 27 entgegen seiner Hubrichtung so beaufschlagt, daß der Ventilschließkörper 14 an dem Ventilsitz 15 in dichtender Anlage gehalten wird. Bei Erregung der Magnetspule 8 wird der Anker 11 in Hubrichtung an den Kern 5 gezogen, wobei der Hub durch den in der Ruhestellung zwischen dem Kern 5 und dem Anker 11 befindlichen Spalt vorgegeben ist. Die starr mit dem Anker 11 verbundene Ventilnadel 13 und der Ventilschließkörper 14 werden in der Hubrichtung mitgeführt, so daß der Ventilschließkörper 14 die Abspritzöffnung 20 freigibt.

Beim Abschalten des Erregerstroms werden der Anker 11, die starr mit dem Anker 11 verbundene Ventilnadel 13 und der Ventilschließkörper 14 durch die erste Rückstellfeder 27 in Schließrichtung entgegen der Hubrichtung beschleunigt. Wenn der Ventilschließkörper 14 auf den Ventilsitz 15 aufprallt, kann es aufgrund der Elastizität der Ventilnadel 13 und der Masse des starr mit der Ventilnadel 13 verbundenen Ankers 11 zu einem Zurückprallen des Ventilschließkörpers 14 von dem Ventilsitz 15 kommen. Dies ist höchst unerwünscht, da dieser Effekt zu einem erneuten kurzzeitigen Öffnen des Brennstoffeinspritzventils 1 führt und sowohl die Zumeßzeit als auch die Zumeßmenge verfälscht werden.

Beim Öffnen des in Fig. 1 dargestellten, bekannten Brennstoffeinspritzventils 1 besteht der Nachteil, daß die von der Magnetspule 8 ausgeübte Magnetkraft unmittelbar nach dem Einschalten des Erregerstroms den Anker 11 und die mit dem Anker 11 starr verbundene Ventilnadel 13 beaufschlagt. Dies ist insofern ungünstig, als die von der Magnetspule 8 ausgeübte Magnetkraft unmittelbar nach Einschalten des Erregerstroms aufgrund der Selbstinduktion der Magnetspule 8 und von der Magnetspule 8 induzierter Wirbelströme nicht sofort ihren endgültigen Wert erreicht. Auf den Anker 11 wird daher in der Anfangsphase des Öffnungshubs zunächst eine verminderte Magnetkraft ausgeübt, was für manche Anwendungsfälle zu einer unbefriedigend langen Öffnungszeit führt.

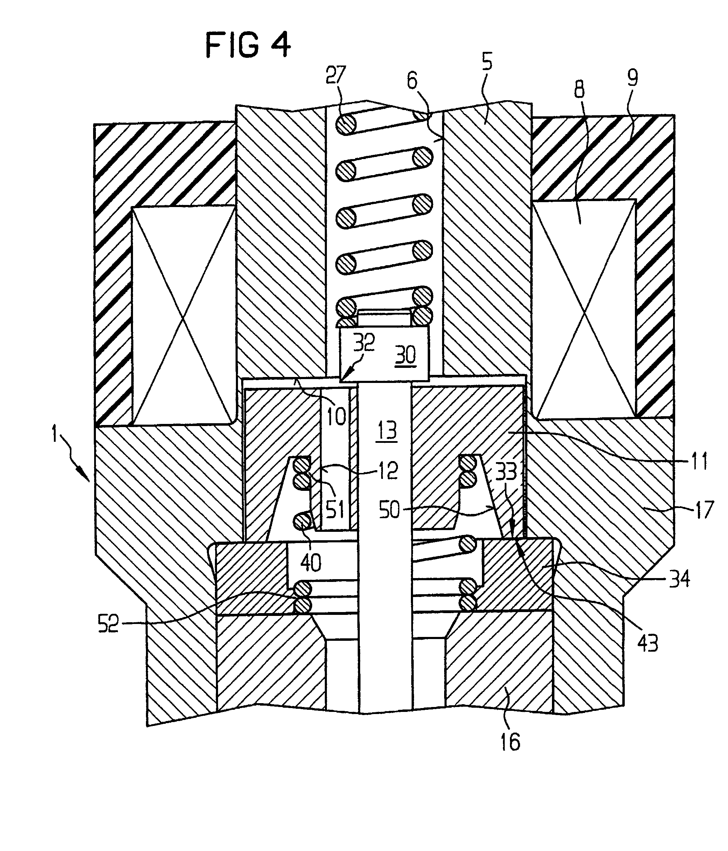

Zur Überwindung dieser Nachteile dient die erfindungsgemäße Ausgestaltung. Ein erstes Ausführungsbeispiel der erfindungsgemäßen Ausgestaltung ist in Fig. 2 in einer auszugsweisen, geschnittenen Darstellung gezeigt. Dabei sind in einer vergrößerten Darstellung nur diejenigen Komponenten gezeigt, die in bezug auf die Erfindung von wesentlicher Bedeutung sind. Die Ausgestaltung der übrigen Komponenten kann mit einem bekannten Brennstoffeinspritzventil 1, insbesondere mit dem in Fig. 1 dargestellten Brennstoffeinspritzventil 1, identisch sein. Zum besseren Verständnis der Erfindung sind bereits anhand von Fig. 1 beschriebene Elemente in Fig. 2 daher mit übereinstimmenden Bezugszeichen gekennzeichnet. In Fig. 3 ist der Ausschnitt III in Fig. 2 in einer gegenüber Fig. 2 nochmals wesentlich vergrößerten Darstellung wiedergegeben.

An dem dem Ventilschließkörper 14 gegenüberliegenden Ende weist die Ventilnadel 13 einen Flansch 30 auf, der im dargestellten Ausführungsbeispiel die Form eines Stufenzylinders 37 hat. Der Anker 11 ist erfindungsgemäß mit der Ventilnadel 13 nicht starr verbunden, sondern gegenüber der Ventilnadel 13 innerhalb vorgegebener Grenzen axial verschiebbar. Die Ventilnadel 13, bzw. im dargestellten Ausführungsbeispiel der Flansch 30 der Ventilnadel 13 weist einen ersten Anschlag 32 für den Anker 11 auf. Der erste Anschlag 32 ist im dargestellten Ausführungsbeispiel an einer ersten Stufe 31 des als Stufenzylinder 37 ausgebildeten Flansches vorgesehen. Ein zweiter Anschlag 33 ist an einem im Ausführungsbeispiel ringförmig oder teilringförmig ausgebilderen gehäusefesten, stationären Anschlagkörper 34 vorgesehen, der in das Ventilgehäuse 17 einsetzbar ist. Die Arretierung des Anschlagkörpers 34 kann z. B. durch Verklemmen erfolgen. Ferner ist es möglich, den Anschlagkörper 34 an dem Gehäusekörper 17 mittels einer Schweißnaht 35 zu sichern. Zur axialen Positionierung des Anschlagkörpers 34 kann das Ventilgehäuse 17 einen gestuften Vorsprung 36 aufweisen. Der Anschlagkörper 34 wird dabei beim Einführen in das Ventilgehäuse 17 so weit in das Ventilgehäuse 17 eingeschoben, bis er an dem Vorsprung 36 des Ventilgehäuses 17 anliegt.

Der als Stufenzylinder 37 ausgebildete Flansch 30 kann mit der Ventilnadel 13 einteilig ausgebildet sein und z. B. durch eine Pressverformung zusammen mit der Ventilnadel 13 hergestellt werden. Alternativ ist es jedoch auch möglich, den Flansch 30 als separates Bauteil auszubilden und z. B. durch Verschweißen mit der Ventilnadel 13 zu verbinden. Letzteres hat den Vorteil, daß die axiale Lage des Flansches 30 vor der endgültigen Verbindung mit der Ventilnadel 13 justierbar ist.

In den Fig. 2 und 3 ist die Ruhestellung des Brennstoffeinspritzventils ohne elektrische Erregung der Magnetspule 8 dargestellt. Wie aus diesen Fig. erkennbar, ist der Abstand zwischen dem ersten Anschlag 32 an dem Flansch 30 der Ventilnadel 13 und dem zweiten, stationären Anschlag 33 so bemessen, daß sich im Ruhezustand des Brennstoffeinspritzventils 1 ein Spalt 39 zwischen dem ersten Anschlag 32 und der dem ersten Anschlag 32 gegenüberliegenden Stirnfläche 38 des Ankers 11 ergibt. Der Anker 11 wird in dem dargestellten Ruhezustand durch eine zweite Rückstellfeder 40 an dem zweiten Anschlag 33 des stationären Anschlagkörpers 34 in Anlage gehalten. Die zweite Rückstellfeder 40 ist zwischen einer zweiten Stufe 41 des als Stufenzylinder 37 ausgebildeten Flansches 30 und der dem ersten Anschlag 32 gegenüberliegenden Stirnfläche 38 des Ankers 11 eingespannt. An der zweiten Stufe 41 des Stufenzylinders 37 stützt sich gegenüberliegend an einer Stirnfläche 44 auch die erste Rückstellfeder 27 ab, die ebenfalls über den Flansch 30 an der Ventilnadel 13 angreift und die Ventilnadel 13 in Schließrichtung vorspannt. Wie sowohl aus Fig. 2 als auch aus Fig. 3 erkennbar, befindet sich zwischen dem stromabwärtigen Ende 10 des Kerns 5 und der oberen Stirnfläche 38 des Ankers 11 ein zweiter Spalt 42, der in axialer Richtung größer bemessen ist als der zwischen dem ersten Anschlag 32 und der Stirnfläche 38 des Ankers 11 vorgesehene erste Spalt 39.

Die Funktionsweise des erfindungsgemäßen Brennstoffeinspritzventils ist folgende:

Beim Öffnen des Brennstoffeinspritzventils nach Erregen der Magnetspule 8 wird zunächst nur der Anker 11 in Hubrichtung gegen die zweite Rückstellfeder 40 beschleunigt, zunächst ohne daß die Ventilnadel 13 und der mit der Ventilnadel 13 verbundene Ventilschließkörper 14 mitgeführt werden. Der Anker 11 trifft aufgrund der Vorbeschleunigung mit einem erheblichen Impuls auf den ersten Anschlag 32 auf und führt die Ventilnadel 13 und den Ventilschließkörper 14 mit. Aufgrund der Vorbeschleunigung und des Impulses des Ankers 11 wird eine relativ zügige Öffnungsbewegung nach dem Auftreffen des Ankers 11 auf den ersten Anschlag 32 erzielt. Ferner hat die Flugzeit des Ankers 11 vor dem Auftreffen auf den ersten Anschlag 32 den Vorteil, daß bei geeigneter Dimensionierung des Abstands zwischen dem ersten Anschlag 32 und dem zweiten Anschlag 33 eine so lange Verzögerungszeit erreicht wird, daß zwischenzeitlich die Magnetkraft ihre volle Intensität erreicht hat. Wie bereits beschrieben, ist in der Anfangsphase der Erregung der Magnetspule 8 die von der Magnetspule 8 erzeugte Magnetkraft aufgrund der Selbstinduktion der Magnetspule 8 und induzierter Wirbelströme vermindert. Die Beschleunigung der Ventilnadel 13 und des Ventilschließkörper 14 erfolgt dann mit voller, nicht reduzierter Magnetkraft, was ebenfalls zu einer kurzen Öffnungszeit beiträgt. Nach dem Erreichen des ersten Anschlags 32 wird der Anker 11 zusammen mit der Ventilnadel 13 und dem Ventilschließkörper 14 in Hubrichtung so lange beschleunigt, bis die Stirnfläche 38 des Ankers 11 die stromabwärtige Stirnfläche des Endes 10 des Kerns 5 erreicht. Der erste Spalt 39 bestimmt daher die Vorbeschleunigung des Ankers 11, während der zweite Spalt 42 den Öffnungshub des Brennstoffeinspritzventils 1 festlegt.

Beim Schließen des Brennstoffeinspritzventils 1 bewegen sich zunächst der Anker 11, die Ventilnadel 13 und der Ventilschließkörper 14 synchron in Schließrichtung. Sobald der Ventilschließkörper 14 den Ventilsitz 15 erreicht, wird die Bewegung des Ventilschließkörpers 14 und der Ventilnadel 13 abrupt beendet, während sich der Anker 11 weiterhin in Schließrichtung bewegt, bis der Anker 11 an dem zweiten Anschlag 33 auftrifft. Selbst wenn der Anker 11 von dem zweiten Anschlag 33 zurückprallt, hat dies keinen negativen Einfluß auf das Öffnungsverhalten des Brennstoffeinspritzventils 1, da durch die zweite Rückstellfeder 40 verhindert wird, daß der Anker 11 den ersten Anschlag 32 nochmals erreicht. Ein erneutes Mitführen der Ventilnadel 13 und des Ventilschließkörpers 14 wird daher verhindert. Der Anker 11 wird schließlich durch die zweite Rückstellfeder 40 an dem zweiten Anschlag 33 in Anlage gehalten, bis ein neuer Stromimpuls eine erneute Öffnung des Brennstoffeinspritzventils 1 durch Erregung der Magnetspule 8 herbeiführt.

Durch die erfindungsgemäße Maßnahme wird daher sowohl eine wirkungsvolle Entprellung als auch eine relativ kurze Öffnungszeit des Brennstoffeinspritzventils 1 erreicht.

Dadurch, daß der sich beim Öffnen zwischen dem zweiten Anschlag 33 und der dem zweiten Anschlag 33 gegenüberliegenden Stirnfläche 43 ausbildende Zwischenraum mit einem sich von dem Brennstoffzulaufstutzen 2 bis zu dem Ventilschließkörper 14 erstreckenden Brennstoffkanal verbunden ist und dieser Zwischenraum beim Öffnen des Brennstoffeinspritzventils 1 mit Brennstoff gefüllt wird, ergibt sich eine zusätzliche Dämpfung des Ankers 11 bei der Schließbewegung. Zwischen dem flächig ausgebildeten zweiten Anschlag 33 und der ebenfalls flächig ausgebildeten gegenüberliegenden Stirnfläche 43 des Ankers 11 stellt sich nämlich bei der Schließbewegung eine Quetschströmung ein, die den Anker 11 an dem zweiten Anschlag 33 prellfrei zur Ruhe kommen läßt.

Da die Flugzeit des Ankers 11 bis zum Erreichen des ersten Anschlags 32 konstant ist, weil sich der Anker 11 aufgrund der zweiten Rückstellfeder 40 in seiner Ruhestellung reproduzierbar an dem ersten Anschlag 33 befindet, muß bei der Ansteuerung des erfindungsgemäßen Brennstoffeinspritzventils 1 lediglich berücksichtigt werden, daß der die Öffnung herbeiführende Stromimpuls um diese Flugzeit gegenüber dem Beginn der Zumeßzeit früher eingeschaltet wird. In dem die Magnetspule 8 ansteuernden elektrischen Ansteuergerät sind jedoch keine weiteren Maßnahmen erforderlich, um die zu Beginn des elektrischen Ansteuerpulses geringere Magnetkraft elektrisch zu kompensieren, wodurch der Aufwand für das elektrische Ansteuergerät verringert wird.

Fig. 4 zeigt ein zweites Ausführungsbeispiel des erfindungsgemäßen Brennstoffeinspritzventils 1. Bereits beschriebene Elemente sind mit übereinstimmenden Bezugszeichen versehen, um die Zuordnung zu erleichtern.

Im Unterschied zu dem bereits anhand der Fig. 2 und 3 beschriebenen Ausführungsbeispiel steht die zweite Rückstellfeder 40 bei dem in Fig. 4 dargestellten zweiten Ausführungsbeispiel unter einer Zugspannung und ist in einer in dem Anker 11 an der dem Kern 5 gegenüberliegenden Seite ausgebildeten, ringförmigen Ausnehmung 50 integriert. Die zweite Rückstellfeder 40 ist an dem Anker 11 an einer ersten, z. B. durch eine Verstemmung gebildeten Halterung 51 und an dem gehäusefesten, stationären Anschlagkörper 34 durch eine weitere, z. B. ebenfalls durch eine Verstemmung hergestellte Halterung 52 befestigt. Die Rückstellfeder 40 befindet sich unter einer Zugvorspannung, so daß in der in Fig. 4 dargestellten Ruhestellung der Anker 11 an dem zweiten Anschlag 33 in Anlage gehalten wird. Der Bewegungsablauf ist im wesentlichen der gleiche wie bei dem anhand der Fig. 2 und 3 beschriebenen ersten Ausführungsbeispiel, wobei der Anker 11 durch die zweite Rückstellfeder 40 stets in Fig. 4 nach unten in Richtung auf den zweiten Anschlag 33 gezogen wird. Dadurch wird auch bei diesem Ausführungsbeispiel verhindert, daß der Anker 11 bei der Schließbewegung von dem zweiten Anschlag 33 so weit zurückprallen kann, daß er den ersten Anschlag 32 wieder erreicht und das Brennstoffeinspritzventil 1 wieder öffnet.

Ergänzend wird noch darauf hingewiesen, daß der Betrieb des Brennstoffeinspritzventils 1 auch in der Weise erfolgen kann, daß vor dem eigentlichen Bestromen der Magnetspule 8 diese mit einem geringeren Strom vorbeaufschlagt wird, um eine Vormagnetisierung zu erreichen. Bei der Vormagnetisierung wird der Anker 11 gegen die Kraft der zweiten Rückstellfeder 40 bis an den ersten Anschlag 32 gezogen, wobei jedoch die Kraft der ersten Rückstellfeder 27 noch nicht überwunden wird. Bei der dann erfolgenden Erhöhung des Erregungsstromes der Magnetspule 8 erfolgt die Öffnung des Brennstoffeinspritzventils 1. Bei dieser Betriebsart läßt sich zwar der Öffnungszeitpunkt des Brennstoffeinspritzventils 1 exakt bestimmen, jedoch wird auf die mit der Vorbeschleunigung des Ankers 11 verbundenen, zu einer kurzen Öffnungszeit führenden, vorstehend beschriebenen Vorteile verzichtet.

## Patentansprüche

1. Brennstoffeinspritzventil (1) für Brennstoffeinspritzanlagen von Brennkraftmaschinen. insbesondere zum direkten Einspritzen von Brennstoff in den Brennraum einer Brennkraftmaschine, mit einer Magnetspule (8), einem durch die Magnetspule (8) in einer Hubrichtung gegen eine erste Rückstellfeder (27) beaufschlagbaren Anker (11) und einer mit einem Ventilschließkörper (14) in Verbindung stehenden Ventilnadel (13), die einen ersten Anschlag (32) für den Anker (11) aufweist, wobei der Anker (11) zusätzlich durch eine zweite Rückstellfeder (40) beaufschlagt ist,
**dadurch gekennzeichnet,**
**daß** ein stationärer zweiter Anschlag (33) für den Anker (11) vorgesehen ist, und
**daß** die zweite Rückstellfeder (40) den Anker (11) entgegen der Hubrichtung beaufschlagt und in einer Ruhestellung bei nicht erregter Magnetspule (8) den Anker (11) an dem zweiten Anschlag (33) so in Anlage hält, daß der Anker (11) von dem an der Ventilnadel (13) ausgebildeten ersten Anschlag (32) um einen vorgegebenen Abstand beabstandet ist.

2. Brennstoffeinspritzventil nach Anspruch 1,
**dadurch gekennzeichnet,**
**daß** der zweite Anschlag (33) an einem stationären Ventilgehäuse (17) ausgebildet ist.

3. Brennstoffeinspritzventil nach Anspruch 1,
**dadurch gekennzeichnet,**
**daß** der zweite Anschlag (33) an einem stationären, die Ventilnadel (13) umgebenden Ventilsitzträger (16) ausgebildet ist, der einen mit dem Ventilschließkörper (14) zusammenwirkenden Ventilsitz (15) trägt.

4. Brennstoffeinspritzventil nach einem der Ansprüche 1 bis 3,
**dadurch gekennzeichnet,**
**daß** der erste Anschlag (32) an einem an der Ventilnadel (13) vorgesehenen Flansch (30) ausgebildet ist.

5. Brennstoffeinspritzvent nach Anspruch 4,
**dadurch gekennzeichnet,**
**daß** die zweite Rückstellfeder (40) zwischen dem Anker (11) und dem Flansch (30) der Ventilnadel (13) eingespannt ist.

6. Brennstoffeinspritzventil nach Anspruch 5,
**dadurch gekennzeichnet,**
**daß** der Flansch (30) als Stufenzylinder (37) ausgebildet ist, wobei der erste Anschlag (32) durch eine erste Stufe (31) des Stufenzylinders (37) gebildet ist und die zweite Rückstellfeder (40) sich an einer zweiten Stufe (41) des Stufenzylinders (37) abstützt.

7. Brennstoffeinspritzventil nach Anspruch 6,
**dadurch gekennzeichnet,**
**daß** sich die erste Rückstellfeder (27) an einer der zweiten Rückstellfeder (40) gegenüberliegenden Stirnfläche (44) des Stufenzylinders (37) abstützt.

8. Brennstoffeinspritzventil nach einem der Ansprüche 1 bis 7,
**dadurch gekennzeichnet,**
**daß** der Anker (11) eine ringförmige Ausnehmung (50) aufweist, in welcher die zweite Rückstellfeder (40) integriert ist.

9. Brennstoffeinspritzventil nach Anspruch 8,
**dadurch gekennzeichnet,**
**daß** die ringförmige Ausnehmung (50) auf der dem ersten Anschlag (32) gegenüberliegenden Seite des Ankers (11) ausgebildet ist und die zweite Rückstellfeder (40) in Zugrichtung vorgespannt ist.

10. Brennstoffeinspritzventil nach einem der Ansprüche 1 bis 9,
**dadurch gekennzeichnet,**
**daß** der zweite Anschlag (33) und eine dem zweiten Anschlag (33) gegenüberliegende Stirnfläche (43) der Ankers (11) flächig ausgebildet sind, und ein sich nach Abheben des Ankers (11) von dem zweiten Anschlag (33) bildender Zwischenraum zwischen dem Anker (11) und dem zweiten Anschlag (33) mit einem Brennstoffkanal verbunden ist, der sich von einem Brennstoffzulaufstutzen (2) bis zu dem Ventilschließkörper (14) erstreckt.

11. Brennstoffeinspritzventil nach einem der Ansprüche 1 bis 10,
**dadurch gekennzeichnet,**
**daß** der vorgegebene Abstand zwischen dem Anker (11) und dem ersten Anschlag (32) so bemessen ist, daß während einer Flugzeit, die der Anker (11) bei Erregung der Magnetspule (8) vom zweiten Anschlag (33) bis zum Erreichen des ersten Anschlags (32) benötigt, sich eine im wesentlichen konstante Magnetkraft, die die Magnetspule (8) auf den Anker (11) ausübt, eingestellt hat.

## Claims

1. Fuel injection valve (1) for fuel injection systems of internal combustion engines, in particular for the direct injection of fuel into the combustion chamber of an internal combustion engine, with a magnet coil (8), an armature (11) that can be acted upon by the magnet coil (8) in a first stroke direction against a first return spring (27), and a valve needle (13), which is connected to a valve-closing element (14) and has a first stop (32) for the armature (11), the armature (11) additionally being acted upon by a second return spring (40), **characterized in that** a stationary second stop (33) is provided for the armature (11), and **in that** the second return spring (40) acts upon the armature (11) counter to the stroke direction and, in a rest position, when the magnet coil (8) is not energized, holds the armature (11) in contact with the second stop (33) in such a way that the armature (11) is at a predefined distance from the first stop (32) formed on the valve needle (13).

2. Fuel injection valve according to Claim 1, **characterized in that** the second stop (33) is formed on a stationary valve housing (17).

3. Fuel injection valve according to Claim 1, **characterized in that** the second stop (33) is formed on a stationary valve seat carrier (16) surrounding the valve needle (13), the stationary valve seat carrier bearing a valve seat (15) which interacts with the valve-closing element (14).

4. Fuel injection valve according to one of Claims 1 to 3, **characterized in that** the first stop (32) is formed on a flange (30) provided on the valve needle (13).

5. Fuel injection valve according to Claim 4, **characterized in that** the second return spring (40) is clamped between the armature (11) and the flange (30) of the valve needle (13).

6. Fuel injection valve according to Claim 5, **characterized in that** the flange (30) is designed as a stepped cylinder (37), the first stop (32) being formed by a first step (31) of the stepped cylinder (37), and the second return spring (40) resting against a second step (41) of the stepped cylinder (37).

7. Fuel injection valve according to Claim 6, **characterized in that** the first return spring (27) rests against an end face (44) of the stepped cylinder (37), the said face facing away from the second return spring (40).

8. Fuel injection valve according to one of Claims 1 to 7, **characterized in that** the armature (11) has a ring-shaped recess (50), into which the second return spring (40) is integrated.

9. Fuel injection valve according to Claim 8, **characterized in that** the ring-shaped recess (50) is formed on the opposite side of the armature (11) from the first stop (32), and the second return spring (40) is prestressed in a direction of tension.

10. Fuel injection valve according to one of Claims 1 to 9, **characterized in that** the second stop (33) and an end face (43) of the armature (11), the said end face facing the second stop (33), are flat, and an interspace that forms between the armature (11) and the second stop (33) once the armature (11) has lifted off from the second stop (33) is connected to a fuel channel extending from a fuel intake nozzle (2) to the valve-closing element (14).

11. Fuel injection valve according to one of Claims 1 to 10, **characterized in that** the predefined distance between the armature (11) and the first stop (32) is dimensioned so that a substantially constant magnetic force applied by the magnet coil (8) to the armature (11) is established during a flight time required for the armature (11) to move away from the second stop (33) and reach the first stop (32) when the magnet coil (8) is energized.

## Revendications

1. Soupape d'injection de carburant (1) pour des installations de carburant de moteurs à combustion interne, en particulier pour injecter directement du carburant dans la chambre de combustion d'un moteur à combustion interne, avec une bobine d'électroaimant (8), avec un induit (11) alimenté par la bobine d'électroaimant (8) dans une direction de levée s'opposant à un premier ressort de rappel (27) et avec une aiguille de soupape (13) relire à un organe d'obturation (14) et qui présente une première butée (32) pour l'induit (11), l'induit (11) étant en outre sous l'action d'un deuxième ressort de rappel (40),
**caractérisée en ce que**
l'on prévoit une deuxième butée (33) stationnaire pour l'induit (11) et le deuxième ressort de rappel (40) agit sur l'induit (11) en s'opposant à la direction de levée et maintient l'induit (11) en position de repos sur la deuxième butée (33) lorsque la bobine d'électroaimant (8) n'est pas excitée, de telle façon que l'induit (11) se trouve à distance de la première butée (32) formée sur l'aiguille de soupape (13) selon une distance prédéfinie.

2. Soupape d'injection de carburant selon la revendication 1,
**caractérisée en ce que**
la deuxième butée (33) est formée sur un boîtier de soupape (17) stationnaire.

3. Soupape d'injection de carburant selon la revendication 1,
**caractérisée en ce que**
la deuxième butée (33) est formée sur un support de siège de soupape (16) stationnaire qui entoure l'aiguille de soupape (13) et qui porte un siège de soupape (15) agissant conjointement avec l'organe d'obturation de soupape (14).

4. Soupape d'injection de carburant selon l'une des revendications 1 à 3,
**caractérisée en ce que**
la première butée (32) est formée sur un flanc (30) prévu sur l'aiguille de soupape (13).

5. Soupape d'injection de carburant selon la revendication 4,
**caractérisée en ce que**
le deuxième ressort de rappel (40) est tendu entre l'induit (11) et le flanc (30) de l'aiguille de soupape (13).

6. Soupape d'injection de carburant selon la revendication 5,
**caractérisée en ce que**
le flanc (30) est formé en tant que cylindre étagé (37), la première butée (32) étant formée par un premier étage (31) du cylindre étagé (37) et le deuxième ressort de rappel (40) s'appuyant sur un deuxième étage du cylindre étagé (37).

7. Soupape d'injection de carburant selon la revendication 6,
**caractérisée en ce que**
le premier ressort de rappel (27) s'appuie sur une surface frontale (44) du cylindre à étages (37) faisant face au deuxième ressort de rappel (40).

8. Soupape d'injection de carburant selon l'une des revendications 1 à 7,
**caractérisée en ce que**
l'induit (11) présente un creux (50) annulaire dans lequel est intégré le deuxième ressort de rappel (40).

9. Soupape d'injection de carburant selon la revendication 8,
**caractérisée en ce que**
le creux (50) annulaire est formé sur le côté de l'induit (11) faisant face à la première butée (32) et le deuxième ressort de rappel (40) est précontraint en traction.

10. Soupape d'injection de carburant selon l'une des revendications 1 à 9,
**caractérisée en ce que**
la deuxième butée (33) et une surface frontale (43) faisant face à la deuxième butée (33) de l'induit sont formées de manière plane et un espace intermédiaire entre l'induit (11) et la deuxième butée (33) qui se forme après que l'induit (11) s'est soulevé de la deuxième butée (33) est relié à un canal de combustible qui s'étend d'un manchon d'arrivée du carburant (2) jusqu'à l'organe d'obturation de soupape (14).

11. Soupape d'injection de carburant selon l'une des revendications 1 à 10,
**caractérisée en ce que**
la distance prédéfinie entre l'induit (11) et la première butée (32) est dimensionnée de telle sorte que la bobine d'électroaimant (8) exerce sur l'induit (11) une force magnétique pratiquement constante pendant la durée de déplacement dont a besoin l'induit (11) pour aller de la deuxième butée (33) jusqu'à la première butée (32), lorsque la bobine d'électroaimant (8) est excitée.
